(19) Europäisches Patentamt
European Patent Office
Office européen des brevets

(11) **EP 2 902 801 A1**

(12) **EUROPEAN PATENT APPLICATION**
published in accordance with Art. 153(4) EPC

(43) Date of publication:
**05.08.2015 Bulletin 2015/32**

(51) Int Cl.:
**G01S 13/56** (2006.01)

(21) Application number: **13842032.8**

(22) Date of filing: **20.09.2013**

(86) International application number:
**PCT/JP2013/005578**

(87) International publication number:
**WO 2014/050055 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2012 JP 2012213344**

(71) Applicant: **Alps Electric Co., Ltd.**
**Tokyo 145-8501 (JP)**

(72) Inventor: **DOU, Yuanzhu**
**Tokyo 145-8501 (JP)**

(74) Representative: **Klunker . Schmitt-Nilson . Hirsch**
**Patentanwälte**
**Destouchesstraße 68**
**80796 München (DE)**

(54) **WIRELESS SENSOR DEVICE**

(57)     [Object] To provide a wireless sensor device capable of detecting a minute variation with high sensitivity by avoiding the deterioration of sensitivity for sensing the motion of a detection target.

[Solution] The wireless sensor device 100 includes an antenna 1 configured to radiate a transmission signal and receive a reflected signal caused by the transmission signal reflected by a detection target, a transmission circuit 2 including an output terminal 2a, connected to the antenna 1, and configured to generate the transmission signal, a detector circuit 3 in which part of the transmission signal and the reflected signal received by the antenna 1 are input thereinto and detected while the transmission signal is transmitted from the transmission circuit 2, the detector circuit 3 being connected to the output terminal 2a, a signal processing circuit 4 connected to the detector circuit 3 and configured to process a signal output from the detector circuit 3, and a control circuit 3 connected to the transmission circuit 2 and configured to control the transmission circuit 2, wherein, between the antenna 1 and the output terminal 2a, a plurality of transmission lines whose line lengths are different from one another and switching means for switching between the plural transmission lines and connecting the antenna 1 and the output terminal 2a to each other are provided, and differences in line length between the plural transmission lines are less than one-fourth of a wavelength of the transmission signal.

FIG. 2

EP 2 902 801 A1

**Description**

Technical Field

The present invention relates to a wireless sensor device and in particular relates to a wireless sensor device capable of detecting a minute variation with high sensitivity.

Background Art

In the past, there have been proposed a sensor that measures a distance to a detection target using a radio wave, a sensor that detects the presence or absence or the approximation of a detection target, and so forth.

In recent years, from a heightened awareness of health, there have been desired sensors which are each capable of detecting vital signs such as a heart rate and breathing in a non-contact manner and less stressful on a detection target.

As a wireless sensor device that detects a detection target in a non-contact manner, there has been known a wireless sensor device described in PTL 1.

In a wireless sensor device 1 described in PTL 1, as illustrated in Fig. 4, a wireless sensor device 900 includes a transmitting and receiving antenna ANT constructed by integrating first and second polarized antennas, the polarization planes of the radiation waves of which are orthogonal to each other, a first mixer circuit 914a that is connected to the first polarized antenna and into which a first reception signal received by the first polarized antenna is input, a second mixer circuit 914b that is connected to the second polarized antenna and into which a second reception signal received by the second polarized antenna is input, a signal generation circuit 911 that generates a pulse signal power-fed into the first and second polarized antennas and supplied to the first and second mixer circuits 914a and 914b, and a differential amplifier circuit 915. This differential amplifier circuit 915 differentially amplifies a mixed output into which the first mixer circuit 914a mixes the first reception signal and the pulse signal and a mixed output into which the second mixer circuit 914b mixes the second reception signal and the pulse signal.

The RF oscillation circuit 911 generates the pulse signal to be power-fed into the transmitting and receiving antenna ANT, and a distributor 912 distributes and individually sends the pulse signal received from the RF oscillation circuit 911 to each of power feeding points 913a and 913b of the transmitting and receiving antenna ANT and sends, to each of the mixer circuits 914a and 914b, part of the pulse signal sent to each of the power feeding points 913a and 913b of this transmitting and receiving antenna ANT.

There has been disclosed the technology of the wireless sensor device where a radio wave radiated from the transmitting and receiving antenna ANT is reflected by a target object O, a reception signal obtained by receiving this reflected wave using the transmitting and receiving antenna ANT and part of the first pulse signal to be power-fed into the power feeding point 913a of the transmitting and receiving antenna ANT through the distributor 912 are input into the mixer circuit 914a, part of the second pulse signal to be power-fed into the power feeding point 913b of the transmitting and receiving antenna ANT is input into the mixer circuit 914b, and it is possible to detect the motion of the target object O by detecting a change in phase difference of the reception signal based on the motion of the target object O.

In the above-mentioned wireless sensor device of the related art, the motion of the target object O is detected from a combined signal Vt of a transmission signal Vo and a reflected wave Vr. If being expressed using a mathematical expression, a relationship between the combined signal Vt and the transmission signal Vo and reflected wave Vr is expressed as the following (Expression 1).

$$\text{(Expression 1)}$$

$$Vt^2 = Vo^2 + Vr^2 - 2 \cdot Vo \cdot Vr \cdot \cos\theta$$

In this regard, however, $\theta$ is the change-in-phase angle (phase difference) of the reflected wave Vr with respect to the transmission signal Vo.

Accordingly, the combined signal Vt is expressed by the following (Expression 2).

$$\text{(Expression 2)}$$

$$Vt = \sqrt{(Vo^2 + Vr^2 - 2 \cdot Vo \cdot Vr \cdot \cos\theta)}$$

Since the phase of the reflected wave Vr with respect to the transmission output Vo changes, a change in the combined signal with respect to a change in the phase is obtained by differentiating (Expression 2) with respect to the phase shift angle θ and expressed by the following (Expression 3).

$$\text{(Expression 3)}$$

$$dVt/d\theta = Vo \cdot Vr \cdot \sin\theta / \sqrt{(Vo^2 + Vr^2 - 2 \cdot Vo \cdot Vr \cdot \cos\theta)}$$

Since being attenuated based on the propagation loss of a round trip with respect to a distance to the detection target and the reflectance of the detection target, the reflected wave Vr is far smaller than the transmission output Vo and satisfies Vo»Vr. Therefore, (Expression 3) may be approximated by (Expression 4).

$$\text{(Expression 4)}$$

$$dVt/d\theta \approx Vr \cdot \sin\theta$$

Citation List

Patent Literature

PTL 1: Japanese Unexamined Patent Application

Publication No. 2011-89864

Summary of Invention

Technical Problem

Even in the wireless sensor device of the related art, in a case where the motion of the detection target is large and the phase of the reflected signal caused by the transmission signal, radiated toward the detection target and reflected by the detection target, greatly changes for the transmission signal, it is possible to detect the motion of the detection target without difficulty.

However, in a case where the motion of the detection target is small and a change in phase of the reflected signal reflected by the detection target is small for the transmission signal, examples of which including a body motion associated with breathing and the motion of a body surface associated with a heart rate, detection sensitivity varies remarkably based on a distance between the wireless sensor device and the detection target.

In a case where a phase difference between the transmission signal and the reflected signal becomes θ≈π/2 radian (abbreviated as rad hereinafter) or θ≈3π/2 (rad) based on a distance between the wireless sensor device and the detection target, the maximum value Vr of a change in the combined signal may be obtained from (Expression 4). However, three has been a problem that since, in a case of the value of θ≈0 (rad) or θ≈π (rad), the output of the combined signal becomes 0, the output thereof is significantly decreased and becomes a null (Null) point.

An object of the present invention is to provide a wireless sensor device capable of solving the above-mentioned problem and detecting a minute variation with high sensitivity by avoiding the deterioration of sensitivity for sensing the motion of a detection target.

Solution to Problem

In order to solve this problem, a wireless sensor device according to Claim 1 includes an antenna configured to radiate a transmission signal and receive a reflected signal caused by the transmission signal reflected by a detection target, a transmission circuit including an output terminal, connected to the antenna, and configured to generate the transmission signal, a detector circuit in which part of the transmission signal and the reflected signal received by the antenna are input thereinto and detected while the transmission signal is transmitted from the transmission circuit, the detector circuit being connected to the output terminal of the transmission circuit, a signal processing circuit connected to the detector circuit and configured to process a signal output from the detector circuit, and a control circuit connected to the transmission circuit and configured to control the transmission circuit, wherein, between the antenna and the output terminal, a plurality of transmission lines whose line lengths are different from one another and switching means for switching between the plural transmission lines and connecting the antenna and the output terminal to each other are provided, and differences in line length between the plural transmission lines are less than one-fourth of a wavelength of the transmission signal.

In the wireless sensor device according to Claim 2, the plural transmission lines are two transmission lines and the line lengths of the two transmission lines are different from each other by one-eighth of the wavelength of the transmission signal.

In the wireless sensor device according to Claim 3, the control circuit controls so as to switch between the plural transmission lines and performs switching by selecting a transmission line where a signal output from the signal processing circuit becomes a maximum.

Advantageous Effects of Invention

According to the invention of Claim 1, between the antenna and the output terminal, the plural transmission lines whose line lengths are different from one another and the switching means for switching between the plural transmission lines and connecting the antenna and the output terminal to each other are provided, and differences in line length between the plural transmission lines are set to less than one-fourth of the wavelength of the transmission signal. Therefore, in a case where, owing to the variation of a distance to the detection target or the like, the phase difference of the reflected wave with respect to the transmission output approaches the null point where sensitivity is reduced and a detection output is reduced, it is possible to change the phase difference by selecting and switching between the transmission lines whose line lengths are different from each other and it is possible to detect a minute variation with high sensitivity by avoiding the deterioration of sensitivity for sensing the motion of the detection target.

According to the invention of Claim 2, since the lengths of the two transmission lines are different from each other by one-eighth of the wavelength of the transmission signal, a phase difference between the transmission signal output to the output terminal of the transmission circuit and the reflected signal, which is caused by the transmission signal reflected by the detection target and returns to the output terminal, varies by $\pi/2$ (rad) by switching between the transmission lines. Therefore, it is possible to operate in a state in which sensitivity is good, by reliably avoiding the null point where sensitivity is remarkably reduced.

According to the invention of Claim 3, since the control circuit controls so as to switch between the plural transmission lines and performs switching by selecting a transmission line where a signal output from the signal processing circuit becomes a maximum, it is possible to detect the motion of the detection target in a state where the sensitivity is higher.

From the above, according to the present invention, it is possible to provide a wireless sensor device capable of detecting a minute variation with high sensitivity by avoiding the deterioration of sensitivity for sensing the motion of a detection target.

Brief Description of Drawings

[Fig. 1] Fig. 1 is a diagram illustrating an outline of an operation of a wireless sensor device according to an embodiment of the present invention.
[Fig. 2] Fig. 2 is a block diagram illustrating a configuration of the wireless sensor device according to the embodiment of the present invention.
[Fig. 3] Fig. 3 is a flowchart of a control operation of the wireless sensor device according to the embodiment of the present invention.

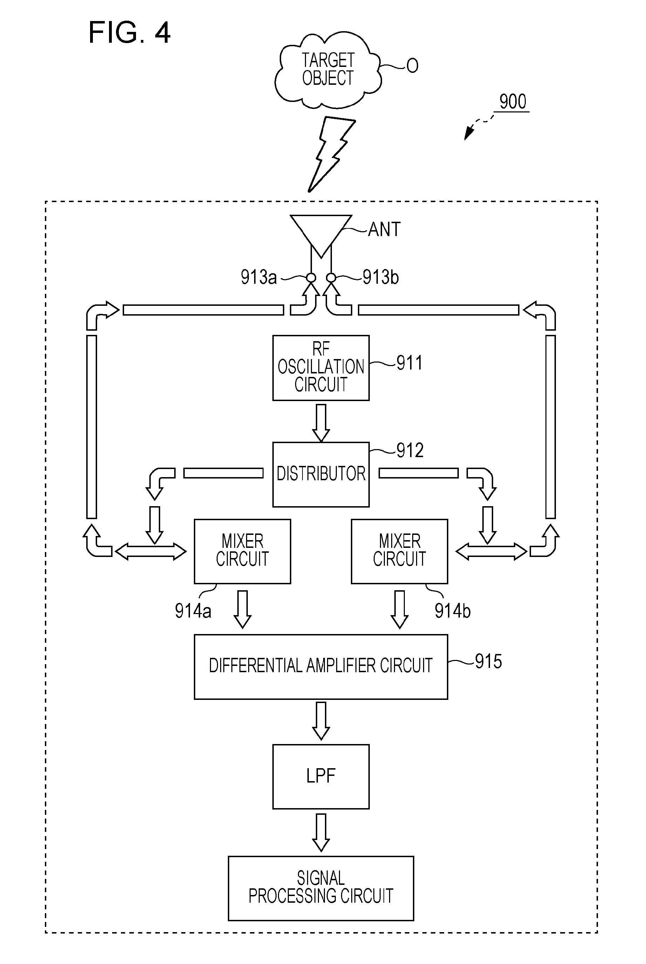

[Fig. 4] Fig. 4 is a block diagram illustrating a configuration of a wireless sensor device of the related art. Description of Embodiments

[First Embodiment]

Hereinafter, a wireless sensor device in a first embodiment will be described.

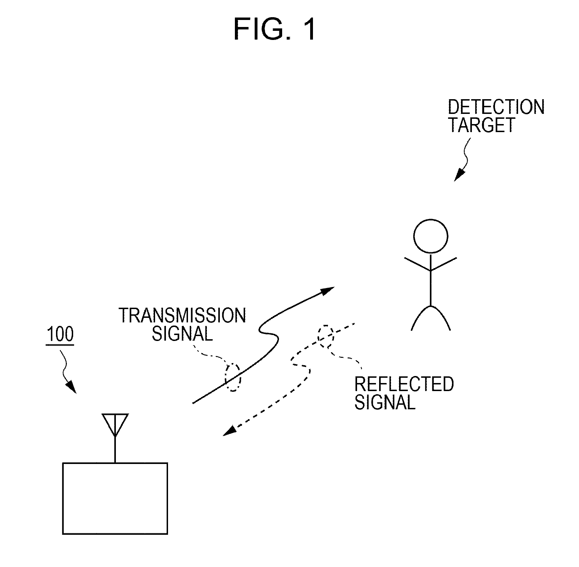

To begin with, the outline of the operation of a wireless sensor device 100 in the present embodiment will be described using Fig. 1. As illustrated in Fig. 1, the wireless sensor device 100 radiates a transmission signal toward a detection target and detects the reflected signal thereof, thereby sensing the detection target.

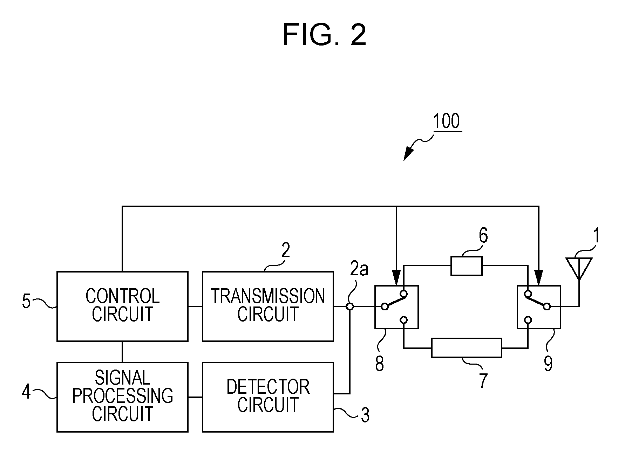

Next, the configuration of the wireless sensor device 100 will be described using Fig. 2. Fig. 2 is a block diagram illustrating the configuration of the wireless sensor device 100.

As illustrated in Fig. 2, the wireless sensor device 100 includes an antenna 1, a transmission circuit 2 equipped with an output terminal 2a, a detector circuit 3, a signal processing circuit 4, a control circuit 5, a first transmission line 6, a second transmission line 7, a first switch 8, and a second switch 9.

In addition to this, the wireless sensor device 100 includes a power supply circuit not illustrated, and electric power necessary for the operations of individual units in the wireless sensor device 100 is supplied thereto.

The antenna 1 is connected to the second switch 9, and one end of each of the first transmission line 6 and the second transmission line 7 is connected to the second switch 9 serving as switching means so that it is possible to select and connect one of the first transmission line 6 and the second transmission line 7 to the antenna 1.

The first switch 8 is connected to another end of each of the first transmission line 6 and the second transmission line 7, the first switch 8 serving as switching means for selecting and connecting one of the first transmission line 6 and the second transmission line 7 to the output terminal 2a of the transmission circuit 2, and the first switch 8 is connected to the output terminal 2a of the transmission circuit 2.

The transmission circuit 2 performs a transmission operation for generating the transmission signal and outputting the transmission signal to the output terminal 2a.

The detector circuit 3 is connected to the output terminal 2a of the transmission circuit 2. In addition, during the transmission operation of the transmission circuit 2, part of the transmission signal output from the output terminal 2a and the reflected signal received by the antenna 1 are input into the detector circuit 3 and part of the input transmission signal and the reflected signal received by the antenna 1 are detected.

The signal processing circuit 4 is connected to the detector circuit 3, performs signal processing for a detection output signal output from the detector circuit 3, and outputs the result thereof to the control circuit 5.

The control circuit 5 is connected to the transmission circuit 2, the signal processing circuit 4, the first switch 8, and the second switch 9.

The control circuit 5 controls the operation state of the transmission circuit 2, acquires an output signal from the signal processing circuit 4, detects a body motion associated with the breathing of the detection target, the motion of a body surface associated with a heart rate thereof, and so forth, and performs determination of the presence or absence of detection and so forth.

Furthermore, the control circuit 5 outputs a control signal for controlling the first switch 8 and the second switch 9, selecting one of the first transmission line 6 and the second transmission line 7, and connecting the antenna 1 and the output terminal 2a to each other.

The first transmission line 6 is a transmission line that has characteristic impedance roughly equal to the output impedance of the transmission circuit 2 and the impedance of the antenna 1 at the frequency of the transmission signal generated by the transmission circuit 2 and whose line length is Le.

The second transmission line 7 is a transmission line that has characteristic impedance roughly equal to the output impedance of the transmission circuit 2 and the impedance of the antenna 1 at the frequency of the transmission signal generated by the transmission circuit 2 and whose line length is Le+$\lambda$/8 that is longer than the line length, Le, of the first transmission line 6 by one-eighth of the wavelength of the transmission signal if one wavelength of the transmission signal is $\lambda$.

Note that, as for the line length of the transmission line, since a propagation velocity is slower than that in vacuum (a traveling distance is shortened) when the transmission signal propagates through the transmission line, the length of the transmission line is expressed using the wavelength or the phase shift angle of the transmission signal propagating through the transmission line. The above-mentioned wavelength of the transmission signal indicates a wavelength on the transmission line and one-eighth of the wavelength corresponds to a length where the phase shift delay of $\pi$/4 (rad) occurs in terms of a phase shift angle.

Next, the operation of the wireless sensor device 100 will be described using Fig. 2.

In a case where the control circuit 5 controls the first switch 8 and the second switch 9 and selects the first transmission line 6, the transmission signal output from the output terminal 2a of the transmission circuit 2 is radiated from the antenna 1 through the first switch 8, the first transmission line 6, and the second switch 9.

The transmission signal radiated from the antenna 1 is reflected by the detection target and received as the reflected signal by the antenna 1.

The reflected signal received by the antenna 1 returns to the output terminal 2a through the second switch 9, the first transmission line 6, and the first switch 8, and part of the transmission signal and the reflected signal are input into the detector circuit 3 and detected.

Given that the length of the path of the first switch 8 and the second switch 9 is negligible, the length of a path from the output terminal 2a to the antenna is expressed by the line length, Le, of the first transmission line 6.

Given that a distance from the antenna 1 to the detection target is Lx, in a case where the first transmission line 6 is selected, the length, L1, of a path where the transmission signal is output from the output terminal 2a, part of the transmission signal radiated by the antenna 1 is reflected by the detection target, and that reflected signal is received by the antenna 1 and returns to the output terminal 2a is expressed as (Expression 5).

(Expression 5)

$$L1 = 2(Lx+Le) = 2Lx+2Le$$

In a case where the control circuit 5 controls the first switch 8 and the second switch 9 and selects the second transmission line 7, the transmission signal output from the output terminal 2a of the transmission circuit 2 is radiated from the antenna 1 through the first switch 8, the second transmission line 7, and the second switch 9.

That the transmission signal is radiated from the antenna 1 and the reflected signal is received by the antenna 1 is the same as in the above description.

The reflected signal received by the antenna 1 returns to the output terminal 2a through the second switch 9, the second transmission line 7, and the first switch 8, and part of the transmission signal and the reflected signal are input into the detector circuit 3 and detected.

Given that the length of the path of the first switch 8 and the second switch 9 is negligible, the length of a path from the output terminal 2a to the antenna is expressed by the line length, $Le+\lambda/8$, of the second transmission line 7.

Given that a distance from the antenna 1 to the detection target is Lx, in a case where the second transmission line 7 is selected, the length, L2, of a path where the transmission signal is output from the output terminal 2a, part of the transmission signal radiated by the antenna 1 is reflected by the detection target, and that reflected signal is received by the antenna 1 and returns to the output terminal 2a is expressed as (Expression 6).

(Expression 6)

$$L2 = 2(Lx+Le+\lambda/8) = 2Lx+2Le+\lambda/4$$

A difference, $\Delta L$, between the length of the path in a case where the first transmission line 6 is selected and the length of the path in a case where the second transmission line 7 is selected becomes (Expression 7), based on (Expression 5) and (Expression 6).

(Expression 7)

$$\Delta L = L2 - L1 = \lambda/4$$

As described above, the length of the path in a case where the first transmission line 6 is selected and the length of the path in a case where the second transmission line 7 is selected are different from each other by a difference corresponding to one-fourth of the wavelength of the transmission signal. Therefore, in accordance with the amount of this difference between the lengths, in a case where the second transmission line 7 is selected, a length leading to the arrival of the reflected wave at the detector circuit 3 is lengthened by $\lambda/4$ compared with a case where the first transmission line 6 is selected, and the phase of the reflected wave is delayed by $\pi/2$ (rad).

Accordingly, by changing selection between the first transmission line 6 and the second transmission line 7, it becomes possible to change the phase of the reflected signal input into the detector circuit 3 by $\pi/2$ (rad). Therefore, in a case where, at the time of selecting, for example, the first transmission line 6, a phase difference between the transmission signal and the reflected signal becomes 0 (rad), based on a distance between the wireless sensor device 100 and the detection target, and becomes the null point where an output for detecting the detection target is remarkably reduced, if the second transmission line 7 is selected, a phase difference between the transmission signal and the reflected signal becomes $\pi/2$ (rad). Therefore, it is possible to detect a minute variation with high sensitivity by avoiding the deterioration of sensitivity.

The detection output detected by the detector circuit 3 is input into the signal processing circuit 4. The signal processing circuit 4 amplifies a change in amplitude of the detection signal and outputs, to the control circuit 5, Analog-to-Digital Convertion signal (AD conversion signal) where the amplified detection signal is converted from an analog signal to a digital signal.

The control circuit 5 controls the signal processing circuit 4, acquires the AD conversion signal, detects a body motion associated with breathing, the motion of a body surface associated with a heart rate, and so forth, received from the detection target, and performs determination of the presence or absence of detection and so forth.

In addition, in a case where the amplitude of a signal associated with the motion of the detection target is smaller than a predetermined value, based on the AD conversion signal acquired from the signal processing circuit 4, the control circuit 5 determines that a distance to the detection target fluctuates and approaches the null point where an output is remarkably reduced, controls the first switch 8 and the second switch 9 so as to select a transmission line different from a currently selected transmission line, and controls so as to prevent sensitivity from being reduced.

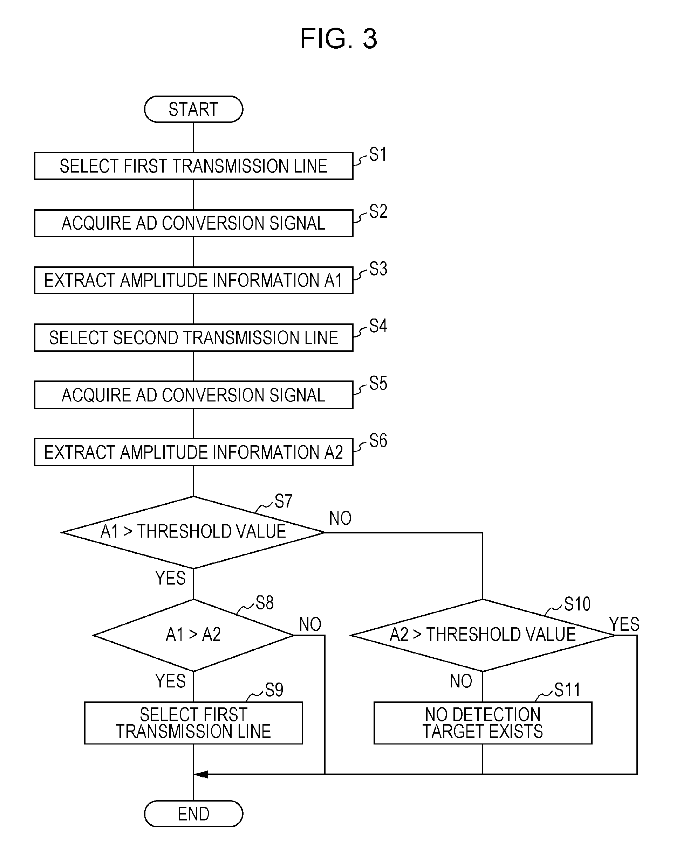

Next, the control operation of the wireless sensor device 100 will be described using Fig. 3. Fig. 3 is a flowchart diagram illustrating the control operation of the wireless sensor device 100, and an operation is periodically repeated and performed using a timer function and so forth embedded in the control circuit 5.

In a procedure S1, the control circuit 5 controls the first switch 8 and the second switch 9 and selects the first transmission line 6.

Next, in a procedure S2, the control circuit 5 controls the signal processing circuit 4 and acquires the AD conversion signal from the signal processing circuit 4.

In a procedure S3, amplitude information corresponding to a change in amplitude of the detection signal caused by the motion of the detection target is extracted from the AD conversion signal, acquired in the procedure S2, and held as first amplitude information A1 indicating detection sensitivity at the time of selecting the first transmission line 6.

In a procedure S4, the control circuit 5 controls the first switch 8 and the second switch 9 and selects the second transmission line 7.

In a procedure S5, the control circuit 5 controls the signal processing circuit 4 and acquires the AD conversion signal from the signal processing circuit 4.

In a procedure S6, amplitude information corresponding to a change in amplitude of the detection signal caused by the motion of the detection target is extracted from the AD conversion signal, acquired in the procedure S5, and held as second amplitude information A2 indicating detection sensitivity at the time of selecting the second transmission line 7.

In a procedure S7, comparison between the held first amplitude information A1 and a threshold value is performed, the threshold value being used for determining that a distance between the wireless sensor device 100 and the detection target approaches the null point and the sensitivity is reduced, and the control operation makes a transition to a procedure S8 in a case where the first amplitude information A1 is greater than the threshold value, and makes a transition to a procedure S10 in a case where the first amplitude information A1 is less than or equal to the threshold value.

In a case where the held first amplitude information A1 and the held second amplitude information A2 are compared with each other in the procedure S8 and the first amplitude information A1 is larger, the control operation makes a transition to a procedure S9. In addition, in a case where the second amplitude information A2 is larger, since the second transmission line 7 is selected at this time point, the control processing is terminated without change. Since, in this case, the second amplitude information A2 at the time of selecting the second transmission line 7 is larger than the first amplitude information A1 while the first amplitude information A1 at the time of selecting the first transmission line 6 is greater than or equal to the threshold value, it is possible to detect the motion of the detection target with higher sensitivity.

In the procedure S9, the control circuit 5 controls the first switch 8 and the second switch 9, selects the first transmission line 6, and terminates the control processing. Since, in this case, the first amplitude information A1 at the time of selecting the first transmission line 6 is greater than or equal to the threshold value and the second amplitude information A2 at the time of selecting the second transmission line 7 is less than or equal to the first amplitude information A1, the first transmission line is finally selected and it is possible to detect the motion of the detection target with high sensitivity.

In a case where, in the procedure S7, the first amplitude information A1 is less than or equal to the threshold value and the control processing makes a transition to the procedure S10, in the procedure S10 comparison between the held second amplitude information A2 and a threshold value is performed, the threshold value being used for determining that a distance between the wireless sensor device 100 and the detection target approaches the null point and the sensitivity is reduced, and the second transmission line 7 is selected at this time point in a case where the second amplitude information A2 is greater than the threshold value. Therefore, the control processing is terminated without change. In addition, in a case where the second amplitude information A2 is less than or equal to the threshold value, the control processing makes a transition to a procedure S11.

In a case of making a transition to the procedure S11, by even selecting any one of the first transmission line 6 and the second transmission line 7, an output for detecting the detection target is not obtained. Therefore, a state where no detection target exists is determined, the control circuit 5 outputs a signal indicating the determining that no detection target exists, and the control processing is terminated.

As described above, according to the wireless sensor device of an embodiment of the present invention, the first transmission line 6 and the second transmission line 7 whose line lengths are different from each other and the first switch 8 and the second switch 9 that switch between the first transmission line 6 and the second transmission line 7 and connect the antenna 1 and the output terminal 2a to each other are provided between the antenna 1 and the output terminal 2a, and a difference in line length between the first transmission line 6 and the second transmission line 7 is set to less than one-fourth of the wavelength of the transmission signal. Therefore, in a case where, owing to the variation of a distance to the detection target or the like, the phase difference of the reflected wave with respect to the transmission output approaches the null point where sensitivity is reduced, and the detection output is reduced, it is possible to change the phase difference by selecting and switching between the transmission lines whose line lengths are different from each other and it is possible to detect a minute variation with high sensitivity by avoiding the deterioration of sensitivity for sensing the motion of the detection target.

Since the lengths of the two transmission lines are different from each other by one-eighth of the wavelength of the transmission signal, a phase difference between the transmission signal output to the output terminal 2a of the transmission circuit 2 and the reflected signal, which is caused by the transmission signal reflected by the detection target and returns to the output terminal 2a, varies by $\pi/2$ (rad) by switching between the transmission lines, and it is possible to operate in a state in which sensitivity is good, by reliably avoiding the null point where sensitivity is remarkably reduced.

Since the control circuit 5 controls so as to switch between the plural transmission lines and performs switching by selecting a transmission line where a signal output from the signal processing circuit 4 becomes a maximum, it is possible to detect the motion of the detection target in a state where the sensitivity is higher.

While the wireless sensor device of an embodiment according to the present invention is specifically described as above, the present invention is not limited to the above-mentioned embodiment and may be variously altered and implemented without departing from the scope thereof. The present invention may be modified and implemented, for example, as follows, and these embodiments belong to the technical scope of the present invention.

(1) While, in the present embodiment, an example in which two transmission lines of the first transmission line and the second transmission line are provided as the transmission lines is described, a configuration where three or more transmission lines are used may be adopted.

(2) While, in the present embodiment, an example in which a difference in line length between the first transmission line and the second transmission line is $\lambda/8$ is illustrated and described, a configuration where the number of transmission lines is increased and differences in line length between the transmission lines are reduced may be adopted. In that case, it becomes possible to accurately select a transmission path whose line length has increased sensitivity.

(3) While, in the present embodiment, there is cited and described an example in which the signal processing circuit 4 amplifies a change in amplitude of the detection signal and outputs the Analog-to-Digital Convertion signal where the amplified detection signal is converted from an analog signal to a digital signal, a configuration where signal processing such as band limiting or sampling is performed may be adopted.

Reference Signs List

| | |
|---|---|
| 1 | antenna |
| 2 | transmission circuit |
| 2a | output terminal |
| 3 | detector circuit |
| 4 | signal processing circuit |
| 5 | control circuit |
| 6 | first transmission line |
| 7 | second transmission line |
| 8 | first switch |
| 9 | second switch |
| 100 | wireless sensor device |

**Claims**

1. A wireless sensor device comprising:

an antenna configured to radiate a transmission signal and receive a reflected signal caused by the transmission signal reflected by a detection target;
a transmission circuit including an output terminal, connected to the antenna, and configured to generate the transmission signal;
a detector circuit in which part of the transmission signal and the reflected signal received by the antenna are input thereinto and detected while the transmission signal is transmitted from the transmission circuit, the detector circuit being connected to the output terminal of the transmission circuit;
a signal processing circuit connected to the detector circuit and configured to process a signal output from the detector circuit; and

a control circuit connected to the transmission circuit and configured to control the transmission circuit, wherein between the antenna and the output terminal, a plurality of transmission lines whose line lengths are different from one another and

switching means for switching between the plural transmission lines and connecting the antenna and the output terminal to each other are provided, and

differences in line length between the plural transmission lines are less than one-fourth of a wavelength of the transmission signal.

2. The wireless sensor device according to Claim 1, wherein
the plural transmission lines are two transmission lines and the line lengths of the two transmission lines are different from each other by one-eighth of the wavelength of the transmission signal.

3. The wireless sensor device according to Claim 1 or Claim 2, wherein
the control circuit controls so as to switch between the plural transmission lines and performs switching by selecting a transmission line where a signal output from the signal processing circuit becomes a maximum.

# FIG. 1

DETECTION
TARGET

100

TRANSMISSION
SIGNAL

REFLECTED
SIGNAL

# FIG. 2

# FIG. 3

```
                    ( START )
                        │
        ┌───────────────────────────────┐
        │  SELECT FIRST TRANSMISSION LINE │──S1
        └───────────────────────────────┘
                        │
        ┌───────────────────────────────┐
        │   ACQUIRE AD CONVERSION SIGNAL  │──S2
        └───────────────────────────────┘
                        │
        ┌───────────────────────────────┐
        │  EXTRACT AMPLITUDE INFORMATION A1 │──S3
        └───────────────────────────────┘
                        │
        ┌───────────────────────────────┐
        │  SELECT SECOND TRANSMISSION LINE │──S4
        └───────────────────────────────┘
                        │
        ┌───────────────────────────────┐
        │   ACQUIRE AD CONVERSION SIGNAL  │──S5
        └───────────────────────────────┘
                        │
        ┌───────────────────────────────┐
        │  EXTRACT AMPLITUDE INFORMATION A2 │──S6
        └───────────────────────────────┘
                        │
```

S7  A1 > THRESHOLD VALUE   — NO

YES

S8  A1 > A2   — NO

YES

S9  SELECT FIRST TRANSMISSION LINE

S10  A2 > THRESHOLD VALUE   — YES

NO

S11  NO DETECTION TARGET EXISTS

END

# FIG. 4

## INTERNATIONAL SEARCH REPORT

| International application No. |
|---|
| PCT/JP2013/005578 |

**A.   CLASSIFICATION OF SUBJECT MATTER**
*G01S13/56*(2006.01)i

According to International Patent Classification (IPC) or to both national classification and IPC

**B.   FIELDS SEARCHED**

Minimum documentation searched (classification system followed by classification symbols)
G01S13/56

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | WO 2012/042636 A1  (Toyota Motor Corp.), 05 April 2012 (05.04.2012), paragraphs [0012] to [0024], [0037] to [0056]; fig. 3 to 11 & US 2012/0235850 A1 | 1-3 |
| Y | JP 10-239426 A  (Ikuo ARAI), 11 September 1998 (11.09.1998), paragraphs [0016] to [0045]; fig. 1 to 4 (Family: none) | 1-3 |
| Y | JP 2007-170990 A  (Yokogawa Denshikiki Co., Ltd.), 05 July 2007 (05.07.2007), paragraphs [0026] to [0032]; fig. 2 to 4 (Family: none) | 1-3 |

☐  Further documents are listed in the continuation of Box C.          ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 October, 2013 (15.10.13) | 29 October, 2013 (29.10.13) |

| Name and mailing address of the ISA/ | Authorized officer |
|---|---|
| Japanese Patent Office |  |
| Facsimile No. | Telephone No. |

Form PCT/ISA/210 (second sheet) (July 2009)